# EUROPÄISCHE PATENTSCHRIFT

(11) **EP 1 066 999 B1**
(45) Veröffentlichungstag und Bekanntmachung des Hinweises auf die Patenterteilung: **15.03.2006**
(21) Anmeldenummer: 00113346.1
(22) Anmeldetag: 23.06.2000
(51) Int. Cl.: B60J 7/057

(54) **Fahrzeugdach**
Vehicle roof
Toit de véhicule

(30) Priorität: 05.07.1999 DE 19930977
(43) Veröffentlichungstag der Anmeldung: 10.01.2001
(73) Patentinhaber: CTS Fahrzeug-Dachsysteme GmbH, 74321 Bietigheim-Bissingen (DE)
(72) Erfinder: Adam, Wolfgang, 72202 Nagold (DE); Braun, Oliver, 73230 Kirchheim (DE); Rühringer, Erich, 71106 Magstadt (DE)
(74) Vertreter: Müller, Gottfried

(56) Entgegenhaltungen:
- EP-A- 0 368 405
- FR-A- 2 019 977
- US-A- 5 069 502

## Beschreibung

Die Erfindung bezieht sich auf ein Fahrzeugdach nach dem Oberbegriff des Anspruches 1.

Die Druckschrift DE 33 16 739 C2 offenbart eine Antriebseinheit für ein Fahrzeugdach mit mehreren verstellbaren, in Fahrzeuglängsrichtung hintereinander angeordneten Dachlamellen, die in Schließstellung eine Dachöffnung verschließen und in Öffnungsstellung zusammengeschoben bzw. aufgestellt werden, so daß die Dachöffnung freigegeben wird. Zur Überführung zwischen Schließstellung und Öffnungsstellung ist ein Antriebsmotor mit einem Antriebsritzel vorgesehen, das zwei drucksteife Antriebskabel, welche mit den Lamellen verbunden sind, antreibt. Der Antriebsmotor und das Antriebsritzel sind im Bereich der Vorderseite der Dachöffnung angeordnet, wobei das Antriebsritzel beide Antriebskabel gleichzeitig beaufschlagt.

Die aus Antriebsmotor und Antriebsritzel bestehende Antriebseinheit im Bereich der Dach-Vorderseite muß aufgrund der beschränkten Platzverhältnisse, insbesondere wegen der geringen Dachdicke, klein bauen; andernfalls sind den Innenraum des Fahrzeugs behindernde Einbauten erforderlich. Andererseits muß der Antriebsmotor eine ausreichend hohe Leistung zur Verfügung stellen, damit die aufgrund der Mehrzahl einzelner beweglicher Lamellen erhöhte Reibung überwunden werden kann und das Fahrzeugdach sicher zu öffnen und zu schließen ist. Die benötigte Motorleistung kann jedoch nur mit einem ausreichend groß dimensionierten Motor erbracht werden.

Gemäß der Druckschrift DE 33 16 739 C2 wird der Konflikt zwischen Motordimension und Motorleistung zugunsten eines großen Antriebsmotors gelöst, der jedoch den Platz im Fahrzeuginnenraum einschränkt, insbesondere die Kopffreiheit einschränkt.

Aus der gattungsbildenden Druckschrift US 5 069 502 ist ein Antrieb für ein Fahrzeugdach eines Kraftfahrzeuges bekannt, welcher zwei Antriebskabel zu beiden Seiten eines verstellbaren Dachteiles umfasst, wobei die Antriebskabel von jeweils einem Antriebsritzel beaufschlagt und die beiden Antriebsritzel über eine gemeinsame Antriebswelle eines Antriebsmotors angetrieben werden.

Die Antriebsritzel befinden sich auf gegenüberliegenden Seiten der gemeinsamen Antriebswelle und kämmen mit dieser. Die beiden Antriebsritzel bilden mit der Antriebswelle des Motors eine zusammenhängende Antriebseinheit, wodurch die konstruktiven Möglichkeiten für die Positionierung des Antriebs eingeschränkt werden. Außerdem weisen die Antriebskabel im Falle einer asymmetrischen Positionierung entweder auf der linken oder auf der rechten Fahrzeugseite unterschiedliche Längen auf, was auf Grund der Eigenelastizität der Antriebskabel beim Öffnen und Schließen des Dachteiles zu dynamischen Längenänderungen führen kann, so daß ein gleichmäßiger Antrieb des Dachteiles nicht sicher gewährleistet und ein Verkanten in der Führung des Dachteiles nicht ausgeschlossen werden kann.

Gemäß einer weiteren in der US 5 069 502 offenbarten Ausführung wird ein in der Dachmitte symmetrisch zwischen beiden Antriebskabeln angeordnetes Antriebsritzel von einer elastischen Antriebswelle eines asymmetrisch angeordneten Antriebsmotors beaufschlagt. In dieser Ausführung reicht es zwar aus, nur ein einziges Antriebsritzel vorzusehen, über das beide Kabel angetrieben werden. Jedoch muss das Antriebsritzel symmetrisch in der Dachmitte angeordnet werden, um unterschiedliche, auf Eigenelastizitäten zurückzuführende Längenänderungen in den Antriebskabel zu vermeiden, wodurch die konstruktiven Möglichkeiten für den Dachantrieb eingeschränkt werden.

Die Druckschrift EP 0 368 405 A2 offenbart einen Dachantrieb mit insgesamt zwei Antriebsmotoren, die auf der linken und rechten Dachseite angeordnet sind. Derartige Lösungen mit zwei Antriebsmotoren benötigen einen hohen Material- und Montageaufwand und benötigen gegenüber nur einem Antriebsmotor zusätzlichen Bauraum. Außerdem muß die Funktion der beiden Antriebsmotoren elektronisch synchronisiert werden.

Zum allgemeinen technologischen Hintergrund wird noch die Druckschrift FR 2 019 977 A genannt.

Der Erfindung liegt das Problem zugrunde, einen Antrieb für ein Fahrzeugdach anzugeben, der bei hoher Betriebssicherheit eine ausreichend hohe Leistung bei zugleich kleiner Bauweise ermöglicht.

Dieses Problem wird erfindungsgemäß mit den Merkmalen des Anspruches 1 gelöst. Zweckmäßige Ausführungsformen sind den weiteren Ansprüchen zu entnehmen.

Gemäß der Neuerung ist nunmehr vorgesehen, daß jedes der beiden Antriebskabel, über die das Dachteil an beiden Stirnseiten zwischen Öffnungs- und Schließstellung verstellt wird, von jeweils einem angetriebenen Antriebsritzel beaufschlagt wird. Dadurch ist es möglich, die Antriebsritzel an unterschiedlichen Orten zu positionieren und konstruktive und bauliche Gegebenheiten zu berücksichtigen. Durch die Aufteilung in zwei Antriebsritzel kann die Position der Antriebsritzel in einem größeren Ausmaß als im Stand der Technik variiert werden, es kann eine flexible Bauweise realisiert werden.

Die beiden Antriebskabel werden über einen gemeinsamen Antriebsmotor angetrieben, der unmittelbar bzw. mittelbar zwei Antriebsritzel beaufschlagt. In dieser Ausführung treibt ein erstes Antriebsritzel eines der beiden Antriebskabel an, das zweite Antriebsritzel liegt zwischen den Antriebskabeln und überträgt die Antriebsbewegung vom ersten auf das zweite Antriebskabel. Diese Ausführung hat den Vorteil, daß nur ein Motor zum Antrieb beider Kabel benötigt wird und dennoch jedem Kabel eine Antriebsquelle zugeordnet wird, wodurch Verzögerungen im Antrieb, bedingt durch elastisches oder plastisches Verhalten der Antriebskabel, vermieden werden. Ein weiterer Vorteil liegt darin, daß die Antriebsbewegung beider Kabel automatisch über das zwischen beiden Kabeln gelegene Antriebsritzel synchronisiert wird.

Die zwei Antriebsritzel können auf unterschiedlichen Seiten der Dachöffnung verteilt positioniert werden, wobei zweckmäßig das erste, unmittelbar vom Motor getriebene Antriebsritzel im seitlichen Bereich der Dachöffnung und das zweite Antriebsritzel im Bereich der Vorderseite der Dachöffnung angeordnet ist, wo die beiden Antriebskabel sich vorteilhaft überlappen. Der Antriebsmotor kann prinzipiell über die gesamte Länge der Dachöffnung im seitlichen Bereich plaziert werden, gegebenenfalls aber auch im Bereich der Vorderkante oder der Rückseite der Dachöffnung.

Das Dachteil ist zweckmäßig mehrteilig ausgeführt und besteht insbesondere aus einer Mehrzahl einzelner, hintereinander angeordneter Lamellen, die von den Antriebskabeln beaufschlagt und zwischen Öffnungs- und Schließstellung verstellt werden.

Weitere Vorteile sind der Figurenbeschreibung und der Zeichnung zu entnehmen, in der die Draufsicht auf ein Kraftfahrzeug mit Lamellendach mit einem Antriebsmotor dargestellt ist.

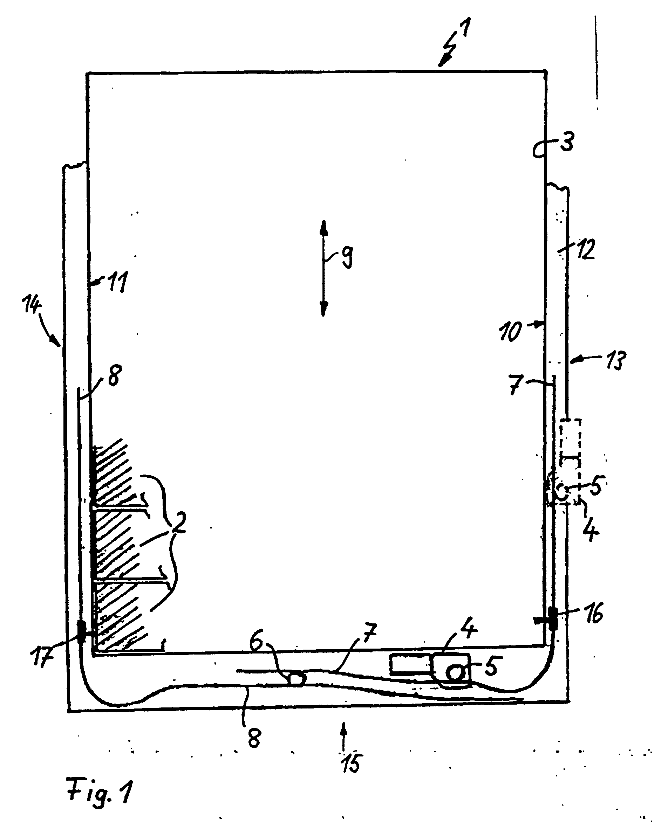

Das in Fig. 1 dargestellte Fahrzeugdach 1 weist eine Dachöffnung 3 auf, die von einer Mehrzahl von Lamellen 2 überspannt ist. Die Lamellen 2 erstrecken sich quer zur Fahrzeuglängsrichtung 9 und sind in Fahrzeuglängsrichtung 9 beweglich in seitlichen Führungsschienen 10 und 11 geführt, die die Dachöffnung 1 seitlich begrenzen und in einen umlaufenden Dachrahmen 12 des Fahrzeugdaches 1 integriert sind. Die Lamellen 2 können aus der in der Figur angedeuteten Schließstellung, in der die Dachöffnung 3 vollständig verschlossen ist, in eine öffnungsstellung überführt werden, in der die Dachöffnung 3 zumindest teilweise geöffnet ist. Die Lamellen 2 werden hierbei zweckmäßig translatorisch in Fahrzeuglängsrichtung 9 verschoben und gleichzeitig um eine quer zur Fahrzeuglängsrichtung 9 verlaufende Querachse aufgestellt.

Die Überführung von Schließ- in Öffnungsstellung bzw. umgekehrt wird mittels einer Antriebseinheit bewerkstelligt, die einen Antriebsmotor 4, zwei Antriebsritzel 5 und 6 sowie zwei drucksteife Antriebskabel 7 und 8 umfaßt. Die Antriebskabel 7 und 8 erstrecken sich jeweils entlang eines Seitenbereiches 13 bzw. 14 im Dachrahmen 12; in diesen Seitenbereichen sind die Antriebskabel jeweils mit den stirnseiten der Lamellen bzw. einer die Lamellen führenden Kinematik verbunden. Die Antriebskabel 7 und 8 sind um ein der Vorderseite 15 benachbartes Eck der Dachöffnung 3 geführt und verlaufen entlang der Vorderseite 15 der Dachöffnung. In Ecknähe sind Befestigungen 16 und 17 vorgesehen, über die die Antriebskabel am Dachrahmen beweglich fixiert werden und die eine Führung im Eckbereich bieten. Die beiden Antriebskabel sind im wesentlichen spiegelsymmetrisch gegenüber der Längsmittelebene des Fahrzeugs angeordnet. Beide Antriebskabel haben eine endliche Länge mit jeweils zwei offenen Stirnseiten.

Seitlich versetzt gegenüber der Längsmittelebene des Fahrzeugs ist im Bereich der Vorderseite 15 der als Elektromotor einschließlich Getriebe ausgebildete Antriebsmotor 4 im Dachrahmen 12 angeordnet, der das erste Antriebsritzel 5 antreibt. Das erste Antriebsritzel 5 beaufschlagt das erste Antriebskabel 7, wodurch die Lamellen im Seitenbereich 13 verstellt werden. Etwa in der Mitte der Vorderseite ist ein zweites Antriebsritzel 6 angeordnet, das auf gegenüberliegenden Seiten mit beiden Antriebskabeln 7 und 8 kämmt. Das zweite Antriebsritzel 6 überträgt den Antrieb vom ersten Kabel 7 auf das zweite Kabel 8, wobei das zweite Kabel 8 im dem ersten Kabel gegenüberliegenden Seitenbereich 14 die Lamellen 2 beaufschlagt. Da die Kabel 7 und 8 auf gegenüberliegenden Seiten des zweiten Antriebsritzels 6 angreifen, wird automatisch eine gleichgerichtete Antriebsbewegung der Kabel erzielt.

Die Antriebskabel 7 und 8 erstrecken sich jeweils von etwa der Mitte eines Seitenbereiches 13 bzw. 14 bis über die Mitte der Vorderseite 15, so daß das zweite Antriebsritzel 6 mit beiden Antriebskabeln 7 und 8 sowohl in Schließstellung als auch in öffnungsstellung der Lamellen in Eingriff steht.

Es kann gegebenenfalls zweckmäßig sein, die Antriebskabel durchgehend auszubilden und um die gesamte Dachöffnung herum zu führen. Dies hat den Vorteil, daß auf eine drucksteife Ausführung der Antriebskabel verzichtet werden kann, weil sowohl bei einer Bewegung in Schließrichtung als auch bei einer Bewegung in Öffnungsrichtung die Antriebskabel auf Zug beansprucht werden.

Weiterhin kann die Einbaulage des Antriebsmotors 4 variiert werden. Wie in Fig. 1 gestrichelt dargestellt, kann der Antriebsmotor 4 mit dem Antriebsritzel 5 auch in einem Seitenbereich 13 oder 14 angeordnet werden.

Darüberhinaus kann es auch zweckmäßig sein, das zweite Antriebsritzel 6, das für die Übertragung der Bewegung von dem elektromotorisch beaufschlagten ersten Antriebskabel auf das zweite Antriebskabel sorgt, in einem Seitenbereich anzuordnen. Es ist auch möglich, sowohl den Antriebsmotor als auch das zweite Antriebsritzel im Bereich der Rückseite der Dachöffnung anzuordnen.

Die Achsen der beiden Antriebsritzel 5 und 6 sind vorteilhaft achsparallel ausgerichtet und liegen insbesondere vertikal bzw. rechtwinklig zur Fahrzeuglängsrichtung 9.

Für die Übertragung des Antriebs von den Antriebsmotoren auf die Antriebsritzel der Antriebskabel kann auch eine biegsame Welle eingesetzt werden. Gegebenenfalls kann der Einsatz einer Getriebeübersetzung zweckmäßig sein. Als weitere Übertragungsmöglichkeiten kommen starre Wellen in Betracht, über die die Antriebsritzel von den Antriebsmotoren betätigt werden. Außerdem kann es angezeigt sein, die Kraftübertragung von den Antriebsmotoren auf die Lamellen mittels starrer Wellen und schienenfest auf den seitlichen Führungsschienen montierten Zahnriemen vorzunehmen. Schließlich können auch Endlos-Zahnriemen vorgesehen sein, die von den Antriebsmotoren angetrieben werden.

## Patentansprüche

1. Fahrzeugdach für ein Kraftfahrzeug, mit einem in Fahrzeuglängsrichtung (9) bewegbaren Dachteil, das zwischen einer eine Dachöffnung (3) im Kraftfahrzeug verschließenden Schließstellung und einer die Dachöffnung (3) freigebenden Öffnungsstellung verstellbar ist, und mit zwei zu beiden Seiten der Dachöffnung (3) geführten und das Dachteil verstellenden Antriebskabeln (7 und 8), denen jeweils ein von einem gemeinsamen Antriebsmotor (4) angetriebenes Antriebsritzel (5 bzw. 6) zugeordnet ist,
**dadurch gekennzeichnet,**
**daß** der Antriebsmotor (4) ein erstes Antriebsritzel (5) unmittelbar antreibt und das erste Antriebsritzel (5) ausschließlich ein erstes Antriebskabel (7) beaufschlagt und das zweite Antriebsritzel (6) von dem ersten Antriebskabel (7) angetrieben ist und ausschließlich das zweite Antriebskabel (8) antreibt.

2. Fahrzeugdach nach Anspruch 1,
**dadurch gekennzeichnet,**
**daß** das zweite Antriebsritzel (6) im Bereich der Vorderseite (15) der Dachöffnung (3) angeordnet ist.

3. Fahrzeugdach nach Anspruch 1 oder 2,
**dadurch gekennzeichnet,**
**daß** die beiden Antriebskabel (7 und 8) jeweils an einem Seitenbereich (13 bzw. 14) der Dachöffnung (3) bis zum zweiten Antriebsritzel (6) im Bereich der Vorderseite (15) geführt sind.

4. Fahrzeugdach nach Anspruch 1 bis 3,
**dadurch gekennzeichnet,**
**daß** der gemeinsame Antriebsmotor (4) im Seitenbereich (13 bzw. 14) der Dachöffnung plaziert ist.

5. Fahrzeugdach nach einem der Ansprüche 1 bis 3,
**dadurch gekennzeichnet,**
**daß** der gemeinsame Antriebsmotor (4) im Bereich der Vorderseite (15) der Dachöffnung plaziert ist.

6. Fahrzeugdach nach einem der Ansprüche 1 bis 5,
**dadurch gekennzeichnet,**
**daß** die Antriebsritzel (5 und 6) parallele Drehachsen aufweisen.

7. Fahrzeugdach nach einem der Ansprüche 1 bis 6,
**dadurch gekennzeichnet,**
**daß** beidseitig der Dachöffnung (3) Führungsschienen (10 bzw. 11) zur Führung des Dachteils vorgesehen sind.

8. Fahrzeugdach nach einem der Ansprüche 1 bis 7,
**dadurch gekennzeichnet,**
**daß** das bewegbare Dachteil eine Mehrzahl von in Längsrichtung (9) hintereinander angeordneter Lamellen (2) umfaßt.

## Claims

1. Vehicle roof for a motor vehicle, with a roof part which can be moved in the longitudinal direction (9) of the vehicle and can be displaced between a closed position closing a roof opening (3) in the motor vehicle and an open position opening up the roof opening (3), and with two driving cables (7 and 8) which are routed on both sides of the roof opening (3) and displace the roof part and which are assigned respective driving pinions (5 and 6) driven by a common driving motor (4), **characterized in that** the driving motor (4) directly drives a first driving pinion (5), and the first driving pinion (5) acts exclusively upon a first driving cable (7), and the second driving pinion (6) is driven by the first driving cable (7) and exclusively drives the second driving cable (8).

2. Vehicle roof according to Claim 1, **characterized in that** the second driving pinion (6) is arranged in the region of the front side (15) of the roof opening (3).

3. Vehicle roof according to Claim 1 or 2, **characterized in that** the two driving cables (7 and 8) are respectively routed on side regions (13 and 14) of the roof opening (3) as far as the second driving pinion (6) in the region of the front side (15).

4. Vehicle roof according to Claims 1 to 3, **characterized in that** the common driving motor (4) is placed in the side region (13 or 14) of the roof opening.

5. Vehicle roof according to one of Claims 1 to 3, **characterized in that** the common driving motor (4) is placed in the region of the front side (15) of the roof opening.

6. Vehicle roof according to one of Claims 1 to 5, **characterized in that** the driving pinions (5 and 6) have parallel axes of rotation.

7. Vehicle roof according to one of Claims 1 to 6, **characterized in that** guide rails (10 and 11) for guiding the roof part are provided on both sides of the roof opening (3).

8. Vehicle roof according to one of Claims 1 to 7, **characterized in that** the movable roof part comprises a plurality of slats (2) arranged one behind another in the longitudinal direction (9).

## Revendications

1. Toit de véhicule pour un véhicule automobile, comprenant une partie de toit déplaçable dans la direction longitudinale du véhicule (9), qui peut être déplacée entre une position de fermeture fermant une ouverture du toit (3) dans le véhicule automobile et une position d'ouverture libérant l'ouverture du toit (3), et comprenant deux câbles d'entraînement (7 et 8) guidés des deux côtés de l'ouverture du toit (3) et déplaçant la partie de toit, auxquels est associé à chaque fois un pignon d'entraînement (5, respectivement 6) entraîné par un moteur d'entraînement commun (4),
**caractérisé en ce que**
le moteur d'entraînement (4) entraîne directement un premier pignon d'entraînement (5) et le premier pignon d'entraînement (5) sollicite exclusivement un premier câble d'entraînement (7) et le deuxième pignon d'entraînement (6) est entraîné par le premier câble d'entraînement (7) et entraîne exclusivement le deuxième câble d'entraînement (8).

2. Toit de véhicule selon la revendication 1,
**caractérisé en ce que**
le deuxième pignon d'entraînement (6) est disposé dans la région du côté avant (15) de l'ouverture du toit (3).

3. Toit de véhicule selon la revendication 1 ou 2,
**caractérisé en ce que**
les deux câbles d'entraînement (7 et 8) sont chacun guidés sur une région latérale (13, respectivement 14) de l'ouverture du toit (3) jusqu'au deuxième pignon d'entraînement (6) dans la région du côté avant (15).

4. Toit de véhicule selon l'une quelconque des revendications 1 à 3,
**caractérisé en ce que**
le moteur d'entraînement commun (4) est placé dans la région latérale (13, respectivement 14) de l'ouverture du toit.

5. Toit de véhicule selon l'une quelconque des revendications 1 à 3,
**caractérisé en ce que**
le moteur d'entraînement commun (4) est placé dans la région du côté avant (15) de l'ouverture du toit.

6. Toit de véhicule selon l'une quelconque des revendications 1 à 5,
**caractérisé en ce que**
les pignons d'entraînement (5 et 6) présentent des axes de rotation parallèles.

7. Toit de véhicule selon l'une quelconque des revendications 1 à 6,
**caractérisé en ce que**
des rails de guidage (10, respectivement 11) pour le guidage de la partie de toit sont prévus des deux côtés de l'ouverture du toit (3).

8. Toit de véhicule selon l'une quelconque des revendications 1 à 7,
**caractérisé en ce que**
la partie de toit déplaçable comprend une pluralité de lamelles (2) disposées les unes derrière les autres dans la direction longitudinale (9).
